# EUROPEAN PATENT APPLICATION

(11) **EP 0 820 860 A2**
(43) Date of publication of application: **28.01.1998**
(21) Application number: 97305459.6
(22) Date of filing: 22.07.1997
(51) Int. Cl.: B32B 27/12

(54) **Fibre reinforced PTFE laminate**

(30) Priority: 23.07.1996 GB 9615424; 08.08.1996 GB 9616673
(71) Applicant: Luggar, Ricky, Romford, Essex RM2 6RS (GB)
(72) Inventor: Luggar, Ricky, Romford, Essex RM2 6RS (GB)
(74) Representative: BATCHELLOR, KIRK & CO.

(57) **Abstract**

A laminate is disclosed comprising: a layer of PTFE bonded to a layer of fibre reinforced composite flexible sheet material.

The laminate is used in handwear having parts made from the laminate and incorporated into the handwear by stitching.

## Description

This invention relates to laminates.

The background to the invention will be explained in relation to a particular application. Other applications will readily occur to the reader.

When angling, particularly when casting into the surf from a beach, it is not uncommon for the angler to burn her or his thumb or to cut her or himself on the line as will be explained. The angler will make casts of the order of one or more hundred meters. To facilitate casting such distances, large weights are used. When the weight is in the air, during a cast, the rate at which the line is pulled off the reel is relatively great. Using a multiplier reel, the reel is first disengaged so that it will rotate freely. The angler stops the drum rotating with her or his thumb, swings the rod forwards and, at the appropriate moment releases the reel. As the weight hits the water the speed of the weight slows greatly and, in order to avoid producing the much hated birds nest of line on the reel, the reel is braked sharply with the angler's thumb. Friction can cause sufficient heat to burn the angler.

Using a fixed spool reel, the angler pushes the bail arm over so that line can pull freely off the reel, catches the line with her or his index finger in order to prevent the line pulling of the reel, swings the rod forward and, at the appropriate moment, frees her or his finger from the line to allow it to pull off the reel. With the large weight used it is possible for the line to slip sufficiently to cut the angler's finger even through a protective glove.

We have discovered that, surprisingly, a low friction material incorporated into the index finger or the thumb of a glove is effective in each case to brake the reel or to catch the line without burning or cutting the angler.

In order to incorporate a low friction material into a glove it is desired to stitch the material. A sheet of PTFE, however, would split at the stitches.

Against this background, in accordance with the invention there is provided a laminate comprising: a layer of PTFE bonded to a layer of fibre reinforced flexible composite sheet material. The fibre reinforcement resists the laminate splitting at the stitching.

In a preferred form, the flexible sheet material contains plastics or rubber, either natural or neoprene.

The PTFE layer is preferably chemically bonded to the reinforced composite layer which contains a rubber compound.

The fibre reinforcement may be nylon.

The fibre reinforcement is preferably in the form of a mesh e.g. woven or extruded.

The invention extends to handwear, e.g. glove, mitten or finger-stall or thumb-stall having parts made from a laminate as claimed in any preceding claim and incorporated into the glove or mitten by stitching.

In some applications it may be desirable to have the laminate incorporated in the palm.

For application in beach casting, the laminate is incorporated in the front surface of one or more fingers or of the thumb.

For that application the glove or mitten may have only an index finger and no thumb or may have only a thumb.

Embodiments of the invention will now be described, by way of example, with reference to the accompanying drawings, in which:
Figure 1 shows a cross section through a laminate embodying the invention;
Figure 2 shows a mitten having a single finger into which the laminate of Figure 1 is incorporated;
Figure 3a shows an alternative mitten having a thumb but no fingers and into which the laminate of Figure 1 is incorporated;
Figure 3b shows an alternative arrangement for the thumb;
Figure 4 is a cross section on X-X of Figure 2;
Figure 5 is an enlargement of Figure 4;
Figure 6 shows a glove intended for pulling cables or for yachting;
Figure 7 shows a glove intended for wheel chair users; and
Figure 8 shows a clove users of centre pin fishing reels.

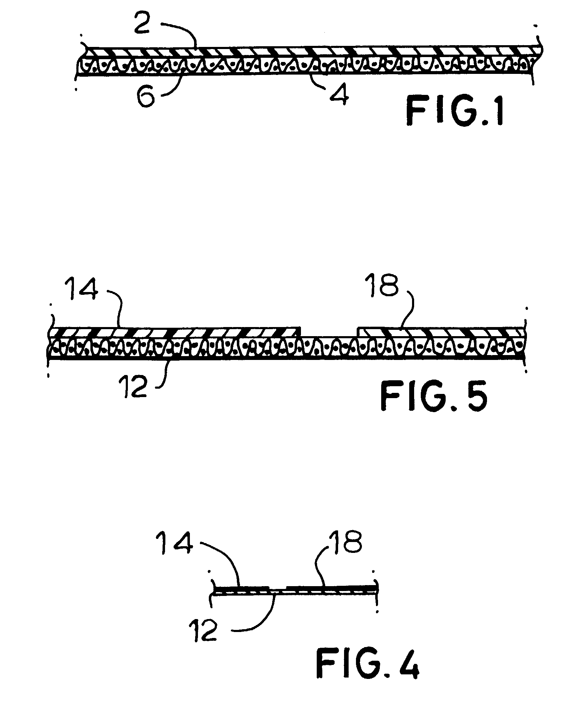

Referring to the drawings the laminate shown in Figure 1 has a PTFE layer 2 approximately 6 to 10 thousandths of an inch thick. The layer is reinforced with K-filament glass and contains an antifriction modifier such as molybdomen disulphide and a pigment. The layer is chemically bonded to a neoprene rubber layer 4 using a chemical rubber bonding agent of a kind known for bonding rubber to other materials. The neoprene layer is reinforced with a woven nylon mesh 6. In general the a layer of low friction material is bonded to a layer of flexible material which has a fibre reinforcement. In alternatives the fibre reinforcement may be in the form of an extruded net, a knitted fabric, a mat, a felt and so on.

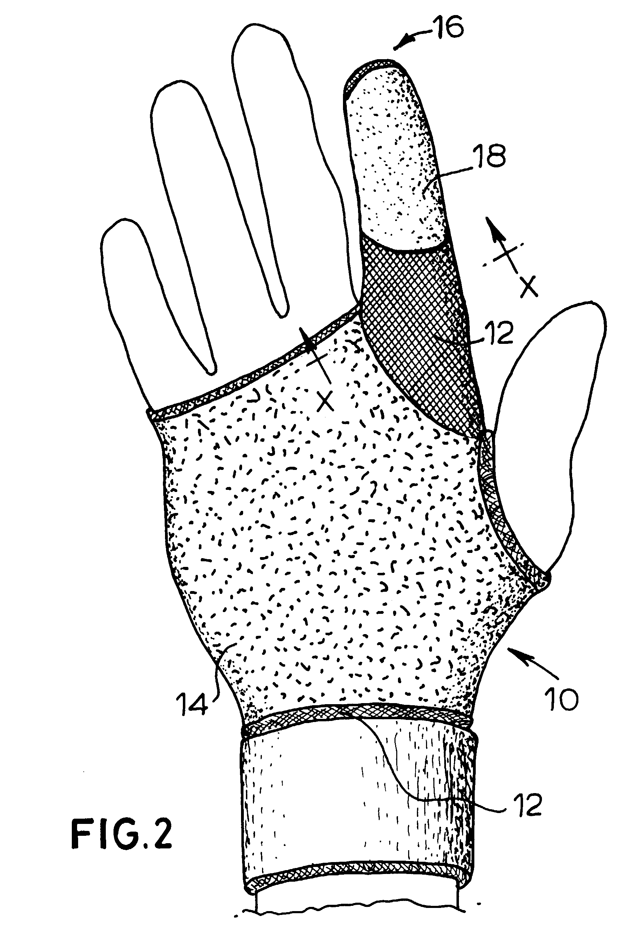

The reinforcement resists splitting when the material is stitched and it can thus be incorporated into a glove or mitten as illustrated in Figures 2 to 5.

Figures 2, 4 and 5 show a mitten 10 having a single finger and no thumb. The mitten is intended for beach casting using a fixed spool reel. The mitten 10 has a base layer made from neoprene rubber parts 12. The parts are cut from sheet neoprene which has a knitted nylon lining on both sides, the material being well known for manufacture of such items as wet suits. The neoprene parts are stitched together. The palm of the mitten is covered by a non-slip layer 14 which is stitched on separately.

The only finger with which the mitten is provided is an index finger 16. There is no thumb. The front, and the side of the finger nearest the thumb, is covered by a patch 18 of the laminate of Figure 1. This is stitched separately to the neoprene base layer.

Surprisingly, since PTFE is a dry lubricant, the patch provides sufficient friction to enable a long cast to be made using a fixed spool reel. It is thought that the low friction qualities of the patch are what avoids the fishing line cutting into the patch if there is slippage.

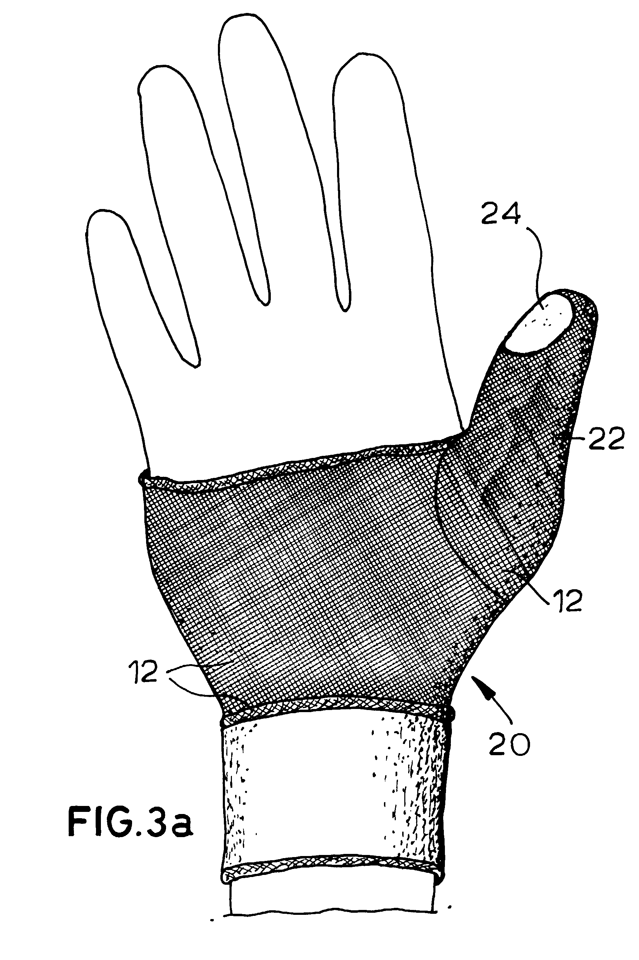

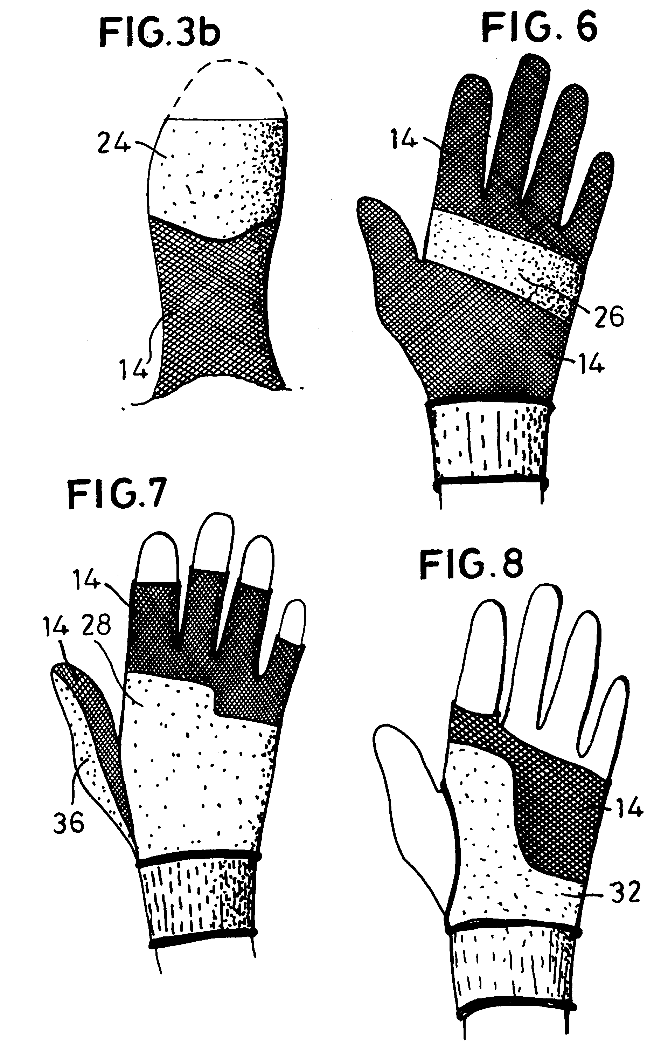

Figure 3a shows a mitten 20 with a thumb 22 but no fingers. The mitten again has a base layer constructed of parts 12 of double lined neoprene rubber. These are again stitched together. In this case no non-slip layer is illustrated on the palm, but that could be stitched on as in the case of Figure 2. As can be seen the front (or inside) and side surfaces of the thumb 22 are covered by a patch 24 of the laminate of Figure 1. The patch 24 is stitched to the neoprene base. As shown in Figure 3b, the thumb may be tipless.

Surprisingly, since PTFE is s dry lubricant, the patch provides sufficient friction to brake the spool of a fixed spool reel when beech casting. Use of the mitten 20 avoids burning the user's thumb, however. This is thought to be because the friction is too low to produce sufficient heat, even though there is sufficient friction to be effective.

A glove suitable for pulling cables or for yachting is shown in Figure 6. Here a patch 26 of the laminate is stitched across the centre of the palm. A non slip layer 14 is stitched separately on the remaining parts of the palm and the front faces of the thumb and fingers. The nonslip material assists the wearer to pull a cable or rope. The laminate 26 allows the user to slide the hand along the cable or rope while maintaining contact with it.

A glove suitable for wheel chair users is shown in Figure 7. Here the palm is almost entirely covered with a patch 28 of the laminate. A further patch 30 is sewn to the side of the thumb. Nonslip material is sewn to the fronts of the thumbs and the fingers and a small area of the palm at the base of the fingers. The fingers and thumbs are tipless. The low friction areas allow the user to move the wheel to propel the chair. The low friction laminate on the side of the thumb and on the palm allows the user to maintain contact with the wheels of the chair.

Yet another arrangement is shown in Figure 8. This is intended for users of centre pin fishing reels. Here a patch 32 of the laminate is sewn to an area of the palm surrounding the thumb on one side and covering the heel of the hand on the other side.

In other applications it may be appropriate to provide patches of the laminate on other or all fingers.

In yet either applications the handwear may be in the form of finger-stall or thumb-stall.

## Claims

1. A laminate comprising: a layer of PTFE bonded to a layer of fibre reinforced composite flexible sheet material.

2. A laminate as claimed in claim 1, wherein the flexible sheet material contains a plastics or rubber compound.

3. A laminate as claimed in claim 2, wherein the PTFE layer is chemically bonded to the reinforced composite layer which contains a rubber compound.

4. A laminate as claimed in any preceding claim, wherein the fibre reinforcement is nylon.

5. A laminate as claimed in any preceding claim, wherein the fibre reinforcement is in the form of a mesh.

6. Handwear having parts made from a laminate as claimed in any preceding claim and incorporated into the handwear by stitching.

7. Handwear as claimed in claim 6, in the form of a glove or mitten having the laminate incorporated in the palm.

8. Handwear as claimed in claim 7, having non-slip material incorporated into parts of the palm and into the fingers and thumb.

9. Handwear as claimed in claim 6, having the laminate incorporated in the front surface of one or more fingers or of the thumb.

10. Handwear as claimed in claim 8, having only an index finger and no thumb or having only a thumb.

11. Handwear as claimed in claim 6, having the laminate incorporated into the outside surface of a thumb, there being a non-slip material on the front surface of the thumb, laminate incorporated into the palm and non-friction material incorporated into the fingers.
